# EUROPEAN PATENT SPECIFICATION

(11) **EP 1 455 677 B1**
(45) Date of publication and mention of the grant of the patent: **10.01.2007**
(21) Application number: 02803128.4
(22) Date of filing: 11.11.2002
(51) Int. Cl.: A61C 15/04

(54) **TOOTH-CLEANING PAPER COMBINED WITH DENTAL FLOSS**
ZAHNREINIGUNGSPAPIER IN VERBINDUNG MIT ZAHNSEIDE
PAPIER DE POLISSAGE DENTAIRE COMBINE A UN FIL DE SOIE DENTAIRE

(30) Priority: 15.11.2001 KR 2001035163 U
(43) Date of publication of application: 15.09.2004
(73) Proprietor: Lee, Jong-Soo, 137-811 Seoul (KR); KTNC Co. Ltd, Seongnam city, Gyeonggi-do 462-120 (KR)
(72) Inventor: LEE, Jong-Soo, Seocho-Gu, Seoul 137-811 (KR)
(74) Representative: Maxton Langmaack & Partner
(86) International application number: PCT/KR2002/002098
(87) International publication number: WO 2003/041608

(56) References cited:
- JP-U- 7 024 313
- US-A- 4 712 572
- US-A- 5 133 971
- US-A- 5 524 764
- US-A- 5 771 522
- US-A- 5 819 765

## Description

### TECHNICAL FIELD

The present invention is directed to a tooth-cleaning paper combined with a dental floss, which is advantageous in terms of easy removal of food debris stuck onto or held between the teeth while not giving other persons an unpleasant feeling, by fixing the dental floss for use in removal of interdental debris to the cleaning paper for scrubbing off food debris stuck onto the teeth.

### PRIOR ART

Generally, with the intention of removing food debris stuck onto the teeth after a meal, persons swish a mouthful of water in their closed mouths or scrub their teeth with an unsterilized napkin. However, such actions give other persons an unpleasant feeling. As well, when food debris is stuck between the teeth, it is removed using a toothpick or a dental floss with the mouth opened. This action also offends other persons.

Further, since there is commonly provided no cleaning paper capable of additionally scrubbing the exposed portions of teeth, the napkin described above is used, but is unsanitary. Also, in case of using dental floss, it is used in a state of being wound around the finger of the user to prevent slipping from the gripped fingers. Therefore, the dental floss is inconveniently and excessively used. Moreover, upon use of the dental floss, the mouth is always opened, and such action gives an unpleasant feeling to other persons.

Patent US 5133971discloses yet another dental hygene tool.

### DISCLOSURE OF THE INVENTION

Leading to the present invention, the intensive and thorough research into tooth-cleaning papers combined with dental floss, carried out by the present inventors aiming to solve the problems encountered in the prior arts, such as no provision of a tooth-cleaning paper capable of scrubbing the tooth, inconvenient and excessive use of a dental floss by winding it around fingers due to slipping thereof, and giving other persons an unpleasant feeling since the mouth is opened to clean the tooth, led to development of a tooth-cleaning paper combined with a dental floss to easily store the dental floss and to prevent the dental floss from slipping, whereby removal of food debris stuck onto the tooth and interdental debris may be easily performed while the mouth is hidden with the cleaning paper, thus not giving other persons an unpleasant feeling.

Therefore, it is an object of the present invention to provide a tooth-cleaning paper combined with a dental floss, which has the advantages of easily scrubbing food debris stuck onto the exposed portion of teeth by use of the cleaning paper, and easy removal of interdental debris by use of the dental floss, thereby not giving an unpleasant feeling to other persons since the mouth is hidden with the cleaning paper upon use of the dental floss, by combining the dental floss to the cleaning paper for easy storage of the dental floss and prevention of slipping of the dental floss.

To achieve the above object, there is provided a tooth-cleaning paper combined with dental floss, comprising the dental floss sewn along an edge of the tooth-cleaning paper to fix the dental floss to the cleaning paper, and the tooth-cleaning paper having a semicircular-shaped edge portion cut out therefrom so that a predetermined length of the dental floss is exposed, the tooth-cleaning paper being a thin paper or a gauze sterilized and wetted with an aqueous fluoride solution.

### BRIEF DESCRIPTION OF THE DRAWINGS

Fig. 1 is a plan view of a tooth-cleaning paper combined with a dental floss according to an embodiment of the present invention;
Fig. 2 is a perspective view of the tooth-cleaning paper combined with the dental floss of Fig. 1; and
Fig. 3 is an expanded perspective view of the part A in Fig. 2.

### BEST MODES FOR CARRYING OUT THE INVENTION

Below, a description will be given of a tooth-cleaning paper combined with a dental floss according to an embodiment of the present invention, with reference to the attached drawings.

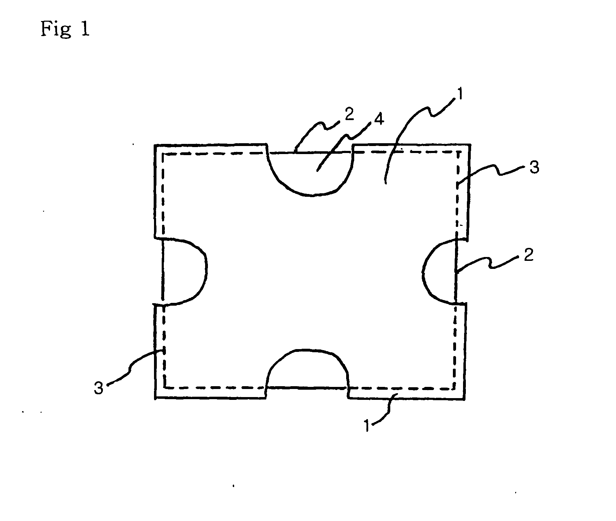

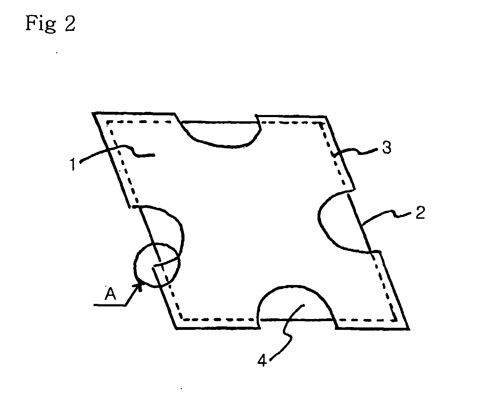

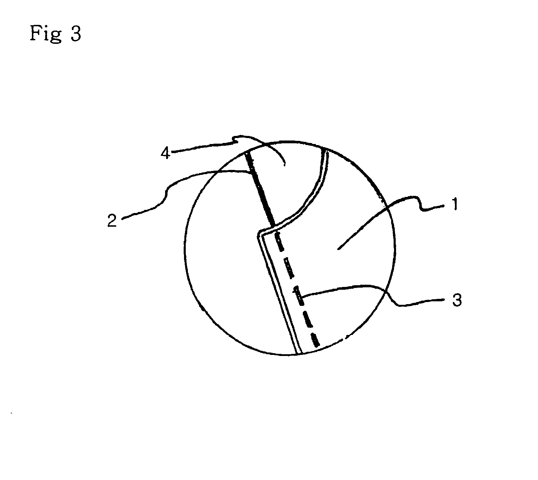

Referring to Fig. 1, there is shown a plan view of the tooth-cleaning paper combined with a dental floss. Additionally, Fig. 2 is a perspective view of the tooth-cleaning paper combined with the dental floss, of which the part A in Fig. 2 is illustrated in Fig. 3.

As shown in Figs. 1 to 3, a paper which is exemplified by a thin paper or a cosmetic paper, or a textile fabric such as gauze, is sterilized and wetted with distilled water containing fluoride and perfume harmless to the human body, to have a suitable moistness, and finally used as a tooth-cleaning paper 1.

Then, a dental floss is sewn along an edge of the tooth-cleaning paper 1, to form a sewn dental floss part 3. By cutting out various shapes from the edge portion of the cleaning paper 1 so that a predetermined length of dental floss is exposed, there is formed an exposed dental floss part 2 in a cut edge portion 4. Thereby, the user may easily use the dental floss.

The exposed tooth portion is scrubbed with the cleaning paper 1, and interdental debris is removed using the exposed dental floss parts 2 in the cut edge portions 4 of the cleaning paper 1. Such a tooth-cleaning paper having dental floss fixed thereto may be substituted for a toothbrush, thus cleaning the tooth.

### INDUSTRIAL APPLICABILITY

As described above, the tooth-cleaning paper combined with a dental floss of the present invention is advantageous in light of healthful cleaning of the tooth by the tooth-cleaning paper, and easy removal of interdental debris using the dental floss fixed to the cleaning paper. In addition, since the tooth may be cleaned or interdental debris may be removed while covering the mouth with the tooth-cleaning paper of the present invention, such cleaning or debris-removing action does not give other persons an unpleasant feeling. Further, according to the present invention, the dental floss, which is conventionally disadvantageous in terms of difficult storage and excessive use thereof, may be easily and economically used in a combined state with the cleaning paper.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A tooth-cleaning paper combined with a dental floss, **characterized in that** the dental floss is sewn along an edge of the tooth-cleaning paper to fix the dental floss to the cleaning paper, and the tooth-cleaning paper having a semicircular-shaped edge portion cut out therefrom so that a predetermined length of the dental floss is exposed, the tooth-cleaning paper being a thin paper or a gauze sterilized and wetted with an aqueous fluoride solution.

2. The tooth-cleaning paper as defined in claim 1, wherein two pieces of the dental floss are sewn to the tooth-cleaning paper, so that the two pieces of the dental floss are exposed.

## Patentansprüche

1. Zahnreinigungspapier in Verbindung mit einer Zahnseide, **dadurch gekennzeichnet, dass** die Zahnseide entlang einem Rand des Zahnreinigungspapiers angenäht ist, um die Zahnseide am Zahnreinigungspapier zu befestigen, wobei ein Teil des Randes des Zahnreinigungspapiers halbkreisförmig ausgeschnitten ist, so dass eine zuvor festgelegte Länge der Zahnseide freilegt, wobei das Zahnreinigungspapier aus einem dünnen Papier oder einer Gaze besteht, welches sterilisiert ist sowie mit einer wässrigen Fluorid-Lösung benetzt ist.

2. Zahnreinigungspapier gemäß Anspruch 1, wobei zwei Stücke der Zahnseide an das Zahnreinigungspapier genäht sind, so dass zwei Teile der Zahnseide freiliegen.

## Revendications

1. Papier de nettoyage dentaire combiné avec une soie dentaire, **caractérisé en ce que** la soie dentaire est cousue le long d'un bord du papier de nettoyage dentaire pour fixer la soie dentaire au papier de nettoyage, et le papier de nettoyage dentaire ayant une découpe de portion de bord de forme semi-circulaire de sorte qu'une longueur prédéterminée de la soie dentaire est exposée, le papier de nettoyage dentaire étant un papier mince ou une gaze stérilisé et mouillé avec une solution aqueuse de fluorure.

2. Papier de nettoyage dentaire selon la revendication 1, dans lequel deux morceaux de la soie dentaire sont cousus au papier de nettoyage dentaire, de manière que les deux morceaux de la soie dentaire soient exposés.
